# EUROPÄISCHE PATENTSCHRIFT

(11) **EP 1 063 042 B1**
(45) Veröffentlichungstag und Bekanntmachung des Hinweises auf die Patenterteilung: **20.04.2005**
(21) Anmeldenummer: 00113232.3
(22) Anmeldetag: 21.06.2000
(51) Int. Cl.: B23D 15/06, B21D 37/10

(54) **Schneidvorrichtung für Bleche**
Apparatus for cutting metal sheets
Dispositif pour couper des feuilles métalliques

(30) Priorität: 24.06.1999 DE 19928841
(43) Veröffentlichungstag der Anmeldung: 27.12.2000
(73) Patentinhaber: Heinz Schwarz GmbH & Co. KG, 32361 Preussisch Oldendorf (DE)
(72) Erfinder: Kaumkötter, Jürgen, 49328 Melle (DE)
(74) Vertreter: Brandt, Detlef, Dipl.-Ing.

(56) Entgegenhaltungen:
- DE-A- 4 231 479
- US-A- 2 846 278
- US-A- 5 490 317

## Beschreibung

Die Erfindung betrifft eine Schneidvorrichtung für Bleche mit mindestens einem fest an einem Messeraufbau eines Untergestells angeordneten Untermesser und mindestens einem in einer Säulenführung einer Kopfplatte vertikal verfahrbaren Obermesser.

Schneidvorrichtungen der eingangs geschilderten gattungsgemäßen Art sind allgemein bekannt, so beispielsweise aus der DE 34 31 111 C2, in der eine Tafelschere zum Schneiden von Blechstreifen offenbart ist, und der DE 42 31 479 A1, in der eine Abschervorrichtung beschrieben ist, und werden in allen Bereichen des metallbe- und verarbeitenden Gewerbes überall dort eingesetzt, wo Blechplatten in kleinere Einheiten zu zerlegen sind. Die Säulenführungen der beweglichen Kopfplatten derartiger Schneidvorrichtungen gewährleisten hierbei innerhalb bestimmter Toleranzen, dass das bewegliche Obermesser präzise zum Werkzeugunterteil bzw. einer Schneidmatrize geführt ist

Die gestiegenen Anforderungen an die Blechbearbeitung haben jedoch dazu geführt, besonders hohe Güteanforderungen an die Schnittkanten der zu bearbeitenden Blechplatten zu stellen, wie sie beispielsweise bei laserschweißfähigen Platinen verwendet werden.

Aufgabe der vorliegenden Erfindung ist es daher, eine Schneidvorrichtung der gattungsgemäßen Art so weiter zu entwickeln, dass die gestiegenen Anforderungen hinsichtlich Schnittgüte, -geschwindigkeit und -toleranzen genügt.

Diese Aufgabe wird erfindungsgemäß durch eine Schneidvorrichtung gemäß Anspruch 1 gelöst.

Durch diese erfindungsgemäße Konstruktion ist gewährleistet, dass das Obermesser unabhängig von der Säulenführung der Kopfplatte separat geführt ist, wodurch sich bei den Schnittkanten der zu bearbeitenden Blechplatten besonders geringe Schnittspalte und maßgenaue Passtoleranzen sowie eine größere Schnittzone ergeben. Darüber hinaus wird der schädliche Einfluss von Schubkräften innerhalb des Werkzeuges gemindert, wie sie beispielsweise durch das Führungsspiel am Pressenstößel sowie Verlagerungen infolge der Auffederung des Pressengestells auftreten können.

Die Schwebeplatte ist gegenüber der Kopfplatte mit Halteelementen festgelegt, die ihr eine Bewegung von ca. 0,1 bis 0,2 mm Horizontalspiel erlauben. Die exakte Führung der Schwebeplatte und des daran befestigten Obermessers wird durch die separaten Führungsbahnen, in denen die Schwebeplatte eine Auf- und Abwärtsbewegung durchführen kann, gewährleistet.

Besondere Ausgestaltungen des Gegenstandes der Erfindung ergeben sich in Verbindung mit der technischen Lehre des Hauptanspruches aus den Merkmalen der Unteransprüche. Es hat sich insbesondere als vorteilhaft erwiesen, dass die Führungsbahnen als runde Säulenführungen gestaltet sind, wobei die Säulenführungen in Wälzführungsbuchsen vertikal verschieblich gelagert sind. Die Wälzführungsbuchsen erfüllen bei dieser Ausgestaltung alle Anforderungen an die gewünschten geringen Lagertoleranzen, wie sie für die Führungsbahnen der Schwebeplatte notwendig sind und bieten darüber hinaus eine kostengünstige Realisierung der verschieblichen Lagerung.

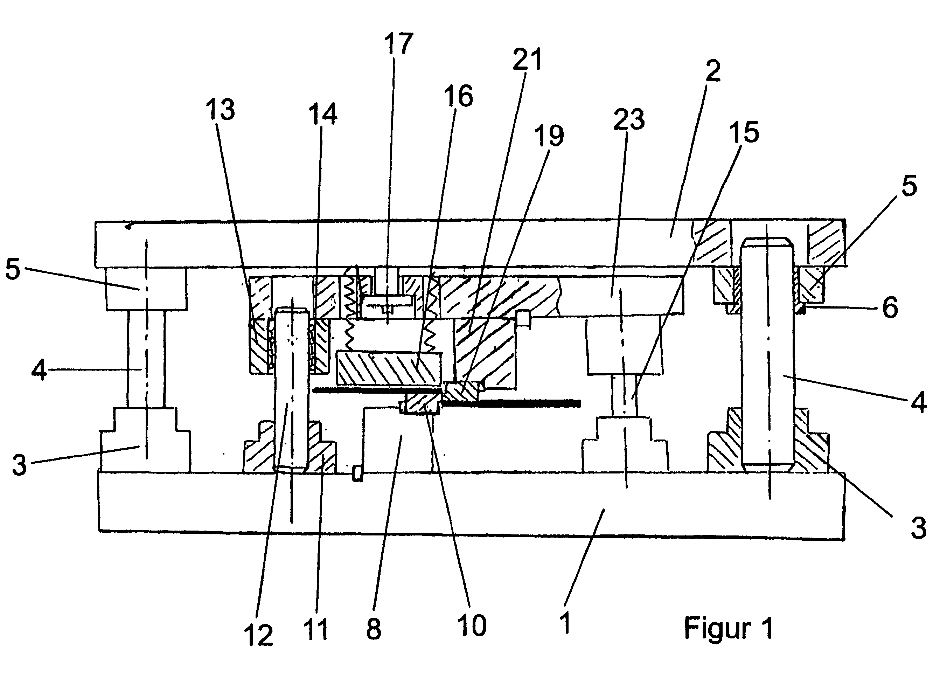

Im Folgenden wird ein Ausführungsbeispiel des Gegenstandes der Erfindung anhand der beigefügten Figur 1 näher erläutert. Die Zeichnung zeigt hierbei einen schematischen Aufbau der erfindungsgemäßen Schneidvorrichtung mit allen für das Verständnis der Erfindung notwendigen Einzelheiten. Auf eine Gesamtdarstellung der Schneidvorrichtung mit ergänzenden konstruktiven Details wurde aus der Gründen der Übersichtlichkeit verzichtet.

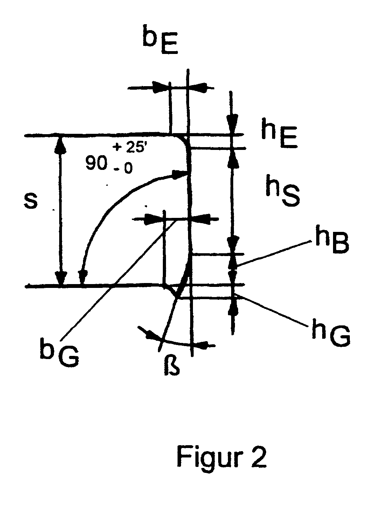

Die Figur 2 zeigt vergrößert die Schnittkante eines Werkstückes mit darin eingetragenen charakteristischen Bezugsgrößen.

Die in der Figur dargestellte Schneidvorrichtung weist ein am Boden verankertes Untergestell 1 auf, auf dem ein Messeraufbau 8 angeordnet ist, an dem wiederum ein Untermesser 10 festgelegt ist. Die gesamte Schneidvorrichtung ist als Säulenkonstruktion ausgeführt, wobei in den Außenbereichen der Schneidvorrichtung zwei Säulenführungen angeordnet sind, die eine vertikale Auf- und Abbewegung einer am oberen, dem Untergestell 1 abgewandten Ende der Säulenführungen angeordneten Kopfplatte 2 ermöglichen. Die Säulenführungen bestehen im Wesentlichen aus einem Säulenblock 3, in dem eine Führungssäule 4 festgelegt ist. Die Führungssäule 4 ist in ihrem oberen, der Kopfplatte 2 zugewandten Ende in einer Führungsbuchse 6 aufgenommen, die in einem Aufnahmeblock 5 an der Kopfplatte 2 angeordnet ist.

Im zentralen Bereich der erfindungsgemäßen Schneidvorrichtung befindet sich an der Unterseite der Kopfplatte 2 eine Schwebeplatte 23, die mit mehreren Halteelementen 17 so an der Kopfplatte 2 festgelegt ist, dass sich zwischen Schwebeplatte 23 und Kopfplatte 2 eine geringfügige horizontale Beweglichkeit im Bereich von 01, bis 0,2 mm ergibt. Die Schwebeplatte 23 selbst ist in zwei Führungsbahnen 12 aufgenommen, die eine vertikale Aufund Abbewegung der Schwebeplatte ermöglichen. An der Unterseite der Schwebeplatte wiederum ist ein Messeraufbau 21 festgelegt, der eine Halterung für ein Obermesser 19 aufweist. Der Schneidvorgang der zu bearbeitenden Blechplatten erfolgt durch eine Abwärtsbewegung des Obermessers 19, wobei die Blechplatte durch einen Niederhalter 16 auf dem Schneidtisch der Schneidvorrichtung festgehalten ist. Der Niederhalter 16 ist federnd an der Kopfplatte 2 abgestützt und drückt die zu schneidende Platte während des Schneidvorganges gegen das Untermesser, um eine Verformung oder Verschiebung der Blechplatte zu verhindern. Gleichzeitig übernehmen der bzw. die Niederhalter ein Abstreifen des Werkstückes bzw. des Abfalles vom Schneidstempel nach dem Schneidvorgang. Die separaten Führungsbahnen 12, 15 der schwimmend gelagerten Schwebeplatte entkoppeln das Obermesser von der Säulenführung zwischen Kopfplatte 2 und Untergestell 1. Die Führungsbahnen 12 und 15 bestehen im Einzelnen jeweils aus einem Säulenblock 11, in dem eine Führungssäule 12 festgelegt ist, wobei der Säulenblock 11 wiederum an Untergestellt festgelegt ist. Dieser Aufbau entspricht im Wesentlichen der bereits oben besprochenen Säulenführung von Kopfplatte 2 zum Untergestellt 1. Das obere Ende der Führungssäule 12 ist durch eine Wälzkörper-Führungsbuchse 14 geführt, die wiederum in einem Aufnahmeblock 13 an der Schwebeplatte 23 aufgenommen ist. Die außerordentlich geringen Toleranzen der verwendeten Wälzkörper-Führungsbuchsen gewährleisten, dass das Obermesser 19 sehr genau geführt ist, wodurch sich sehr geringe Schnittspalten und maßgenaue Passtoleranzen sowie eine größer Schnittzone für die gesamte Schneidvorrichtung ergeben. Darüber hinaus wird die Güte der Schnittkante eines zu bearbeitenden Werkstückes verbessert. Es lassen sich mit der erfindungsgemäßen Gestaltung der Schneidvorrichtung Schnittkanten folgender Güte herstellen:

| | | |
|---|---|---|
| - Schnittgradhöhe: | h_{G} < 0,1 x s | für s = 0,5 - 1,0 mm |
| | h_{G} < 0,05 x s | für s = 1,1 - 3,0 mm |
| - Bruchflächenwinkel: | β < 3° | für s = 0,5 - 3,0 mm |
| - Kanteneinzugshöhe: | h_{E} < 0,1 x s | für s = 0,5 -1,0 mm |
| | h_{E} < 0,2 x s | für s =1,1-3,0 mm |
| - Glattschrüttfläche: | h_{S} > ¾ x s | |
| - Schnittgeradheit: | SG < 0,03 mm für s = 0,5-1,0 mm auf 1 m Schnittkantenlänge bezogen | |
| | SG < 0,04 mm für s = 1,1-3,0 mm auf 1 m Schnittkantenlänge bezogen | |

Die Bezeichnungen sind in der Figur 2 dargestellt.

Ein einzelner Schneidvorgang erfolgt im Wesentlichen gemäß dem nachfolgen geschilderten Ablauf. Die Kopfplatte 2 mit der daran angeordneten Schwebeplatte 23 befindet sich zunächst in ihrer oberen Ausgangsstellung, so dass ein Werkstoffstreifen zugeführt werden kann. Danach erfolgt der Schließvorgang des Werkzeuges. Das Obermesser 19 sowie der bzw. die Niederhalter 16 bewegen sich in Richtung des Untermessers 10 wobei zunächst die Säulenführungen des Untergestells 1 in die Führungsbuchsen 6 der Kopfplatte 2 eintauchen und somit eine Vorzentrierung der an das Kopfteil 2 angeordneten Schwebeplatte 23 mit dem Obermesser 19 bewirken. Die weitere Abwärtsbewegung der Kopfplatte 2 führt danach dazu, dass die Führungssäulen 12 bzw. 15 in die jeweils zugeordneten Wälzkörper-Führungsbuchsen 14 an der Schwebeplatte 23 eintauchen und die endgültige präzise Führung der Schwebeplatte 23 bewirken. Das Werkstück selber wird in diesem Stadium durch den Niederhalter gegen das Untermesser gedrückt, so dass eine weitere Abwärtsbewegung der Schwebeplatte den Schnittvorgang durch das Obermesser 19 bewirkt. Danach erfolgt ein Abstreifen des Werkstoffes und ein Ausstoßen des beschnittenen Werkstückes aus der Schneidvorrichtung, während die Kopfplatte 2 wieder in ihre obere Ausgangsposition zur Vorbereitung des nächsten Schneidvorganges gebracht wird.

### Bezugszeichenliste:

- 1.: Untergestell
- 2.: Kopfplatte
- 3.: Säulenblock
- 4.: Führungssäule
- 5.: Aufnahmeblock
- 6.: Führungsbuchse
- 8.: Messeraufbau
- 10.: Untermesser
- 11.: Säulenblock
- 12.: Führungssäule
- 13.: Aufnahmeblock
- 14.: Wälzkörper-Führungsbuchse
- 15.: Führungssäule
- 16.: Niederhalter
- 17.: Halteelement
- 19.: Obermesser
- 21.: Messeraufbau
- 23.: Schwebeplatte

## Patentansprüche

1. Schneidvorrichtung für Bleche, mit mindestens einem fest an einem Messeraufbau eines Untergestells (1) angeordneten Untermesser (10) und mindestens einem in einer Säulenführung (4) einer Kopfplatte (2) vertikal verfahrbaren Obermesser (19), **dadurch gekennzeichnet, dass** das Obermesser (19) an einer an der Kopfplatte (2) schwimmend gelagerten separaten Schwebeplatte (23) festgelegt ist, wobei die Schwebeplatte (23) in mindestens zwei Führungsbahnen (12, 15) vertikal verschieblich aufgenommen ist.

2. Schneidvorrichtung nach Anspruch 1, **dadurch gekennzeichnet, dass** die Führungsbahnen (12, 15) als runde Säulenführungen gestaltet sind, wobei die Säulenführungen in Wälzkörper-Führungsbuchsen (14) vertikal verschieblich gelagert sind.

3. Schneidvorrichtung nach Anspruch 1 oder 2, **dadurch gekennzeichnet, dass** das Obermesser (19) in einem Messerhalter (8) an der Schwebeplatte (23) auswechselbar festgelegt ist.

## Claims

1. Cutting device for metal sheets, with at least one lower blade (10) securely arranged on a blade assembly of an underframe (1) and at least one upper blade (19) that can be vertically driven in a column guide (4) of a head plate (2), **characterised in that** the upper blade (19) is secured on a separate suspended plate (23) floatingly mounted on the head plate (2), wherein the suspended plate (23) is accommodated in a vertically displaceable manner in at least two guideways (12, 15).

2. Cutting device according to claim 1, **characterised in that** the guideways (12, 15) are designed as round column guides, wherein the column guides are vertically displaceably mounted in anti-friction bushings (14).

3. Cutting device according to claim 1 or 2, **characterised in that** the upper blade (19) is replaceably fixed in a blade holder (8) on the suspended plate (23).

## Revendications

1. Dispositif de coupe pour tôles, comportant au moins un couteau inférieur (10) monté fixe sur un porte-couteau d'un châssis inférieur (1), et au moins un couteau supérieur (19) déplaçable verticalement dans un guide à colonne (4) d'une plaque de tête (2), **caractérisé en ce que** le couteau supérieur (19) est fixé sur une plaque flottante séparée (23) montée flottante sur la plaque de tête (2), la plaque flottante (23) étant logée de manière à être déplaçable verticalement dans au moins deux voies de guidage (12, 15).

2. Dispositif de coupe selon la revendication 1, **caractérisé en ce que** les voies de guidage (12, 15) sont agencées sous la forme de guides à colonnes circulaires, les guides à colonnes étant montés dans des douilles (14) de guidage de corps de roulement de manière à être déplaçables verticalement.

3. Dispositif de coupe selon la revendication 1 ou 2, **caractérisé en ce que** le couteau supérieur (19) est fixé de manière à être interchangeable dans un porte-couteau (8) sur la plaque flottante (23).
